# EUROPÄISCHE PATENTSCHRIFT

(11) **EP 1 225 424 B1**
(45) Veröffentlichungstag und Bekanntmachung des Hinweises auf die Patenterteilung: **24.01.2018**
(21) Anmeldenummer: 01127981.7
(22) Anmeldetag: 24.11.2001
(51) Int. Cl.: B60K 31/00

(54) **Verfahren zur Fahrdynamikregelung**
Method of controlling dynamics of vehicle movement
Procédé de réglage de la dynamique du mouvement d'un véhicule

(30) Priorität: 18.01.2001 DE 10101982
(43) Veröffentlichungstag der Anmeldung: 24.07.2002
(73) Patentinhaber: Bayerische Motoren Werke Aktiengesellschaft, 80809 München (DE)
(72) Erfinder: Bauer, Günter, 85238 Petershausen (DE)

(56) Entgegenhaltungen:
- EP-A- 0 543 543
- EP-A- 0 597 500
- EP-A1- 0 940 654
- EP-A2- 0 933 272
- DE-A- 19 855 400
- DE-C- 19 722 947
- US-A- 5 177 685

## Beschreibung

Die Erfindung bezieht sich auf ein Verfahren zur Fahrdynamikregelung in einem Kraftfahrzeug, durch das zumindest abhängig von Daten eines Navigationssystems automatisch fahrdynamische Eingriffe vorgenommen werden.

Ein derartiges Verfahren ist beispielsweise im Zusammenhang mit einem Längsregelsystem aus der DE 196 38 511 A1 bekannt. Dabei handelt es sich insbesondere um Geschwindigkeitsregelsysteme, die die Antriebs- und/oder Bremssysteme eines Fahrzeuges in der Weise ansteuern, daß entweder eine Sollgeschwindigkeit oder ein Sollabstand zum vorausfahrenden Fahrzeug eingestellt wird. Auch die DE 198 55 400 A1 beschreibt ein ähnliches Verfahren. Bei dem aus der DE 196 38 511 A1 bekannten Verfahren werden derartige Geschwindigkeitsregelsysteme mit Informationen eines ebenfalls im Fahrzeug vorhandenen Navigationssystem beliefert. Hierzu kann beispielsweise ein dem Längsregelsystem zugeordnetes Steuergerät eine Schnittstelle zur Elektronik des Navigationssystems aufweisen. Auch die EP 0 933 272 A2 beschreibt ein System zur Fahrdynamikregelung basierend auf den Straßendaten.

Bisher weisen die über eine Navigationsdatenbank im Navigationssystem abgelegten Straßennetze Fehlertoleranzen auf. Auch der bisher verwendete Sensor (GPS) zur Positionsbestimmung des Fahrzeuges ist teilweise noch zu ungenau. Die Navigationsdaten sind oft auch unvollständig oder nicht aktuell.

Zur Zielführung im Navigationssystem sind bereits Kartenabgleichmethoden (auch "Mapmatching" genannt) bekannt, durch die jede gemessene Position des Fahrzeugs einer möglichen Position auf einer in der Navigationsdatenbank abgespeicherten Strecke zugeordnet wird. Derartige Kartenabgleichmethoden sind beispielsweise in der DE 39 05 602 C2 oder aus der US 5,862,511 bekannt. Die allgemeine Güte dieser Kartenabgleichmethoden sind auch abhängig von der Berücksichtigung fahrdynamischer Informationen, wie Geschwindigkeit, Richtungsvektoren oder Gierrate, unterschiedlich. Probleme hierbei sind insbesondere Fehlzuordnungen bei parallelen Streckenverläufen und bei niedrigen Geschwindigkeiten. Auch die EP 0 940 654 A1 beschreibt eine Navigationsvorrichtung zum Kartenabgleich.

Es ist Aufgabe der Erfindung, bei automatischen fahrdynamischen Eingriffen unter Verwendung von Informationen des Navigationssystems Fehlreaktionen durch Ungenauigkeiten des Navigationssystems zu verhindern oder zumindest abzuschwächen.

Diese Aufgabe wird durch die Merkmale des Patentanspruchs 1 gelöst. Vorteilhafte Weiterbildungen der Erfindung sind die Gegenstände der abhängigen Ansprüche.

Erfindungsgemäß wird eine Qualitätsinformation über die Daten des Navigationssystems gebildet. Die von den Daten des Navigationssystems abhängigen fahrdynamischen Eingriffe werden unter Berücksichtigung dieser Qualitätsinformation durchgeführt.

Die Qualitätsinformation wird vorzugsweise durch Bestimmung der allgemeinen Güte eines Kartenabgleichprözesses gebildet ("allgemeine Mapmatchqualität"). Bei einem Kartenabgleichprozess wird eine ermittelte Position einer möglichen Position in einer abgespeicherten Strecke im Navigationssystem zugeordnet. Die allgemeine Güte wird z. B. durch das Maß der Abweichung einer gemessenen Position von einer mittels der Kartenabgleichmethode korrigierten möglichen Position (auf einer in Form von Datenbankwerten abgespeicherten Strecke) unter Berücksichtigung der GPS-Grundgenauigkeit bestimmt. Die GPS-Grundgenauigkeit ist abhängig von der Anzahl der gemessenen Satteliten, und kann außerdem dynamisch durch einen Vergleich zwischen relativen Teilabschnitten aus GPS-Positionen und aus der Fahrdynamik gemessenen relativen Teilabschnitten ermittelt werden.

Vorzugsweise wird die Qualitätsinformation auch durch Vergleich der ermittelten Strecke mit in der Nähe befindlichen abgespeicherten Strecken zur Ermittlung einer Wahrscheinlichkeit gebildet ("Eindeutigkeitsqualität"), mit der sich das Kraftfahrzeug auf einer bestimmten abgespeicherten Strecke befindet.

In einer weiteren vorteilhaften Weiterbildung der Erfindung wird die Qualitätsinformation auch durch Auswertung des Krümmungsausmaßes der ermittelten Strecke zur Bestimmung eines Genauigkeitswertes gebildet ("Längsgenauigkeit"), durch den die Längsabweichung des Kraftfahrzeuges abgeschätzt werden kann.

Vorzugsweise wird das erfindungsgemäße Verfahren in ein ohnehin für ein Längsregelsystem vorgesehenes Steuergerät integriert. Hierzu muß lediglich eine Schnittstelle zum Navigationssystem hergestellt werden.

In der Zeichnung ist ein Ausführungsbeispiel der Erfindung dargestellt. Es zeigt
- Fig. 1: eine schematische Darstellung von der Bedeutung des Begriffes "allgemeine Mapmatchqualität",
- Fig. 2: eine Darstellung zur Erläuterung des Begriffes "Eindeutigkeitsqualität" und
- Fig. 3: eine Darstellung zur Erläuterung des Begriffes "Längsgenauigkeit".

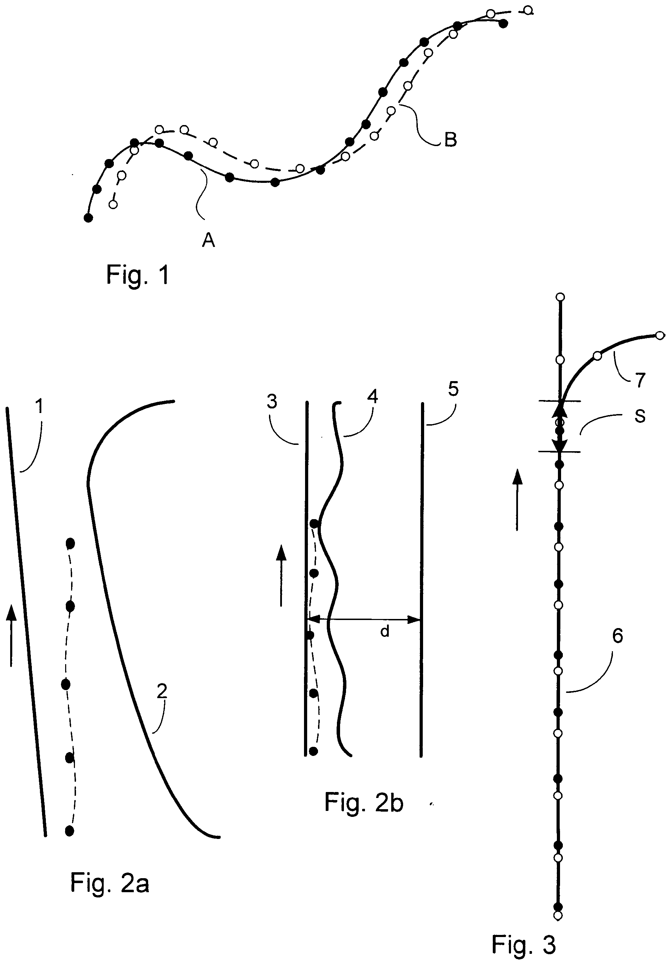

In Fig. 1 ist beispielhaft ein aktueller zurückliegender definierter Streckenverlauf A dargestellt. Der Streckenverlauf A ist der ermittelte und durch das Mapmatching korrigierte Streckenverlauf. Die allgemeine Mapmatchqualität kann beispielsweise durch Auswertung der eindimensionalen Korrelation ermittelt werden, aus der die Güte der Übereinstimmung des zurückliegenden abgespeicherten Streckenverlaufs B mit dem Streckenverlauf A aus dem Mapmatching resultiert. Die Qualitätsinformation kann beispielsweise als Abweichung in X% (bei 100%= totale Übereinstimmung) angegeben werden.

In Fig. 2a und in Fig. 2b sind Straßenkartenausschnitte dargestellt, die nahe beieinanderliegende abgespeicherte Strecken 1 und 2 bzw. 3, 4 und 5 zeigen. In den Figuren 2a und 2b sind die zurückgelegten ermittelten Strecken als ermittelte Positionspunkte, interpoliert durch eine gestrichelte Linie dargestellt. Die Qualitätsinformation wird auch durch Vergleich der zurückgelegten ermittelten Strecke mit in der Nähe befindlichen abgespeicherten Strecken zur Ermittlung einer Wahrscheinlichkeit gebildet ("Eindeutigkeitsqualität"), mit der sich das Kraftfahrzeug auf einer bestimmten abgespeicherten Strecke befindet. Der Pfeil zeigt die angenommene Fahrtrichtung an. Im Beispiel nach Fig. 2a stimmte die zurückgelegte ermittelte Strecke zunächst eindeutig (100%) mit der Strecke 1 überein. Die Strecke 2 verläuft zum Teil sehr nahe und fast parallel zur Strecke 1. Die letzten beiden Positionspunkte der zurückgelegten ermittelten Strecke befinden sich näher bei Strecke 2 als bei Strecke 1. Das Fahrzeug kann mit einer gewissen Wahrscheinlichkeit (Y%) von Strecke 1 auf Strecke 2 gewechselt sein, wenn ein Streckenwechsel entweder ohne vorhandene Straße oder über eine in die Navigationsdatenbank nicht eingegebene Verbindungsstraße vorgenommen wurde. Im Hinblick auf fahrdynamische Eingriffe ist dies wesentlich, da die Strecke 1 geradeaus weiterführt, die Strecke 2 jedoch in eine scharfe Rechtskurve übergeht. Auf Strecke 2 wäre beispielsweise eine automatische Verzögerung (z. B. Rückschaltung oder Bremseingriff) des Fahrzeuges als fahrdynamischer Eingriff sinnvoll. Auf Strecke 1 wäre dieser Eingriff jedoch irreführend. Abhängig von der Eindeutigkeitsqualität, hier z. B. 80% Wahrscheinlichkeit für Strecke 1, wird der Eingriff für Strecke 2 beispielsweise unterbunden oder nur in abgeschwächter Form vorbereitet. Bei der Bestimmung der Eindeutigkeitsqualität wird hier auch die zurückliegende ermittelte Strecke (Vergangenheit) berücksichtigt.

Insbesondere ist für die Eindeutigkeitsqualität maßgeblich, wie ähnlich sich der zurückgelegte ermittelte Streckenverlauf im Vergleich mit in der Nähe befindlichen abgespeicherten Streckenverläufen verhält und/oder welchen Abstand der zurückgelegte ermittelte Streckenverlauf zu den in der Nähe befindlichen abgespeicherten Streckenverläufen aufweist.

In Fig. 2b befindet sich der zurückgelegte ermittelte Streckenverlauf zwischen der Strecke 3 und der Strecke 4. Die letzte ermittelte Position ist näher an Strecke 4, die übrigen ermittelten Positionen sind näher an Strecke 3. Der Verlauf der zurückgelegten ermittelten Strecke ist dem Verlauf von Strecke 3 ähnlicher als dem Verlauf von Strecke 4. Der Verlauf von Strecke 5 ist zwar dem Verlauf der ermittelten Strecke ähnlicher als der Verlauf von Strecke 4. Strecke 5 scheidet jedoch mit großer Wahrscheinlichkeit wegen des großen Abstandes d zur ermittelten Strecke aus. Aufgrund des im Wesentlichen geraden Verlaufes der zurückgelegten ermittelten Strecke befindet sich das Fahrzeug mit großer Wahrscheinlichkeit auf Strecke 3, da erstens der Verlauf der Strecke 4 im Unterschied zur ermittelten Strecke und zur Strecke 3 sehr kurvenreich ist und zweitens der Abstand der ermittelten Strecke zu Strecke 3 im Mittel kleiner ist als zu Strecke 4. Auch im vorliegenden Beispiel gemäß Fig. 2b ist die Berücksichtigung dieser Wahrscheinlichkeit (hohe Eindeutigkeitsqualität) für fahrdynamische Eingriffe wesentlich; denn auf der kurvenreichen Strecke 4 wären andere fahrdynamische Eingriffe erforderlich als auf der geraden Strecke 3.

Die Qualitätsinformation wird auch durch Auswertung des Krümmungsausmaßes der ermittelten Strecke zur Bestimmung eines Genauigkeitswertes gebildet ("Längsgenauigkeit"), durch den die Längsabweichung des Kraftfahrzeuges abgeschätzt werden kann. In Fig. 3 ist eine lange gerade Strecke 6 dargestellt, von der am Ende eine Kurve 7 abzweigt. Grundsätzlich ist die Längsgenauigkeit umso schlechter, je gerader eine zurückgelegte Strecke ist und je länger diese gerade Strecke ist. In Fig. 3 ist ein Bereich S dargestellt, der den möglichen Aufenthaltsbereich eines Fahrzeuges nach Zurücklegen der langen geraden Strecke 6 kennzeichnet. Die Längsgenauigkeit kann als Z% im Zusammenhang mit der Größe des Bereichs S abgegeben werden. 100% Längsgenauigkeit ist erreicht, wenn der Bereich S gegen Null geht. Die Längsgenauigkeit ist hier maßgeblich für fahrdynamische Eingriffe, wenn das Fahrzeug in die Strecke 7 übergeht. Bei einem großen Bereich S bzw. bei einer geringen Längsgenauigkeit werden beispielsweise fahrdynamische Eingriffe nur in entsprechend reduziertem Maße vorgenommen. Z. B. kann bei einer automatischen Kurven-Geschwindigkeitsregelung, die auf Strecke 7 in Fig. 3 vorgenommen werden könnte, bei schlechter Längsgenauigkeit ein Bremseingriff etwas früher aber "weicher" umgesetzt werden.

Die Qualitätsinformation setzt sich also vorzugsweise aus der allgemeinen Mapmatchqualität, der Eindeutigkeitsqualität und der Längsgenauigkeit zusammen. Grundsätzlich wird festgehalten, dass bei einer Qualitätsinformation, die auf eine hohe Qualität der aus dem Navigationssystem erhältlichen Daten schließen lässt, hochdynamische Eingriffe eher vorgenommen werden als bei einer Qualitätsinformation, die auf eine niedrige Qualität schließen lässt, bei der vorsichtige Eingriffe bevorzugt werden.

## Patentansprüche

1. Verfahren zur Fahrdynamikregelung in einem Kraftfahrzeug, durch das zumindest abhängig von Daten eines Navigationssystems automatisch fahrdynamische Eingriffe vorgenommen werden, wobei eine Qualitätsinformation über die Daten des Navigationssystems gebildet wird, und wobei die von den Daten des Navigationssystems abhängigen Eingriffe unter Berücksichtigung dieser Qualitätsinformation durchgeführt werden, wobei bei einer Qualitätsinformation, die auf eine hohe Qualität der aus dem Navigationssystem erhältlichen Daten schließen lässt, hochdynamische Eingriffe eher vorgenommen werden als bei einer Qualitätsinformation, die auf eine niedrige Qualität schließen lässt, bei der vorsichtige Eingriffe bevorzugt werden.

2. Verfahren nach Patentanspruch 1, wobei die Qualitätsinformation durch Bestimmung der allgemeinen Güte eines Kartenabgleichprozesses gebildet wird, bei der eine ermittelte Position einer möglichen Position in einer abgespeicherten Strecke im Navigationssystem zugeordnet wird.

3. Verfahren nach Patentanspruch 1 oder 2, wobei die Qualitätsinformation auch durch Vergleich der ermittelten Strecke (B) mit in der Nähe befindlichen abgespeicherten Strecken (A, 1, 2, 3, 4, 5) zur Ermittlung einer Wahrscheinlichkeit gebildet wird, mit der sich das Kraftfahrzeug auf einer bestimmten abgespeicherten Strecke (A, 1, 2, 3, 4, 5) befindet.

4. Verfahren nach einem der Patentansprüche 1 bis 3, wobei die Qualitätsinformation auch durch Auswertung des Krümmungsausmaßes der ermittelten Strecke (B) zur Bestimmung eines Genauigkeitswertes gebildet wird, durch den die Längsabweichung des Kraftfahrzeuges abgeschätzt werden kann.

5. Steuergerät zur Fahrdynamikregelung in einem Kraftfahrzeug, wobei das Steuergerät eingerichtet ist, zumindest abhängig von Daten eines Navigationssystems automatisch fahrdynamische Eingriffe vorzunehmen, eine Qualitätsinformation über die Daten des Navigationssystems zu bilden, und die von den Daten des Navigationssystems abhängigen Eingriffe unter Berücksichtigung dieser Qualitätsinformation durchzuführen, wobei das Steuergerät weiter eingerichtet ist bei einer Qualitätsinformation, die auf eine hohe Qualität der aus dem Navigationssystem erhältlichen Daten schließen lässt, hochdynamische Eingriffe eher vorzunehmen als bei einer Qualitätsinformation, die auf eine niedrige Qualität schließen lässt, bei der vorsichtige Eingriffe bevorzugt werden.

6. Steuergerät nach Anspruch 5, wobei das Steuergerät eingerichtet ist, die Qualitätsinformation durch Bestimmung der allgemeinen Güte eines Kartenabgleichprozesses zu bilden, bei dem eine ermittelte Position einer möglichen Position in einer abgespeicherten Strecke im Navigationssystem zugeordnet wird

7. Steuergerät nach Anspruch 5 oder 6, wobei das Steuergerät eingerichtet ist, die Qualitätsinformation auch durch Vergleich der ermittelten Strecke (B) mit in der Nähe befindlichen abgespeicherten Strecken (A, 1, 2, 3, 4, 5) zur Ermittlung einer Wahrscheinlichkeit zu bilden, mit der sich das Kraftfahrzeug auf einer bestimmten abgespeicherten Strecke (A, 1, 2, 3, 4, 5) befindet.

## Claims

1. A method of controlling dynamics of vehicle movement in a motor vehicle, by means of which method interventions relating to dynamics of vehicle movement are automatically performed at least depending on data of a navigation system, wherein quality information relating to the data of the navigation system is formed, and wherein the interventions dependent on the data of the navigation system are performed under consideration of this quality information, wherein, with quality information indicating a high quality of the data obtainable from the navigation system, highly dynamic interventions can be performed rather than with quality information indicating a low quality, in which case cautious interventions are preferred.

2. A method according to claim 1, wherein the quality information is formed by determining the general quality of a map matching process, in which an ascertained position is associated with a possible position in a stored route in the navigation system.

3. A method according to claim 1 or 2, wherein the quality information is also formed by comparing the ascertained route (B) with stored routes (A, 1, 2, 3, 4, 5) located in the vicinity in order to ascertain a likelihood with which the motor vehicle is located on a specific stored route (A, 1, 2, 3, 4, 5).

4. A method according to any one of claims 1 to 3, wherein the quality information is also formed by evaluating the extent of the curvature of the ascertained route (B) in order to determine an accuracy value by which the longitudinal deviation of the motor vehicle can be estimated.

5. A control unit for controlling dynamics of vehicle movement in a motor vehicle, wherein the control device is designed to automatically perform interventions relating to dynamics of vehicle movement at least depending on data of a navigation system, to form quality information relating to the data of the navigation system, and to perform the interventions depending on the data of the navigation system under consideration of this quality information, wherein, with quality information indicating a high quality of the data obtainable from the navigation system, the control device is also designed to perform highly dynamic interventions rather than with quality information indicating a low quality, in which case cautious interventions are preferred.

6. A control unit according to claim 5, wherein the control unit is designed to form the quality information by determining the general quality of a map matching process, in which an ascertained position is associated with a possible position in a stored route in the navigation system.

7. A control unit according to claim 5 or 6, wherein the control unit is designed to form the quality information also by comparing the ascertained route (B) with stored routes (A, 1, 2, 3, 4, 5) located in the vicinity in order to determine a likelihood with which the motor vehicle is located on a specific stored route (A, 1, 2, 3, 4, 5).

## Revendications

1. Procédé de régulation de la dynamique de déplacement dans un véhicule, par lequel des interventions sur la dynamique de déplacement automatiques sont effectuées au moins en fonction de données d'un système de navigation, une information de qualité étant formée par l'intermédiaire des données du système de navigation, et, les interventions dépendant des données du système de navigation étant effectuées en tenant compte de cette information de qualité, procédé selon lequel en présence d'une information de qualité conduisant à conclure à une qualité élevée des données obtenues à partir du système de navigation des interventions importantes sur la dynamiques sont plus effectuées qu'en présence d'une information de qualité qui conduit à conclure à une qualité moindre, pour laquelle des interventions prudentes sont préférées.

2. Procédé conforme à la revendication 1, selon lequel l'information de qualité est formée par détermination de la validité globale d'un procédé de rapprochement de données, selon lequel une position déterminée est associée à une position possible sur un parcours enregistré dans le système de navigation.

3. Procédé conforme à la revendication 1 ou 2, selon lequel l'information de qualité est également formée par comparaison du parcours (B) déterminé avec des parcours (A, 1, 2, 3, 4, 5) enregistrés situés à proximité pour déterminer la probabilité, selon laquelle le véhicule se trouve sur un parcours (A, 1, 2, 3, 4, 5) enregistré déterminé.

4. Procédé conforme à l'une des revendications 1 à 3, selon lequel l'information de qualité est également formée par exploitation du degré de courbure du parcours (B) déterminé pour déterminer la valeur de précision avec laquelle l'écart longitudinal du véhicule peut être estimé.

5. Appareil de commande permettant la régulation de la dynamique de déplacement dans un véhicule, cet appareil de commande étant réalisé pour permettre d'effectuer, au moins en fonction de données d'un système de navigation des interventions automatiques sur la dynamique de déplacement, de former une information de qualité par l'intermédiaire des données du système de navigation, et d'effectuer des interventions dépendant des données du système de navigation en prenant en considération cette information de qualité, l'appareil de commande étant également réalisé pour permettre, d'effectuer en présence d'une information de qualité permettant de conclure à une qualité élevée des données obtenues à partir du système de navigation, des interventions importantes sur la dynamique plus qu'en présence d'une information de qualité permettant de conclure à une qualité moindre pour laquelle des informations prudentes sont préférées.

6. Appareil de commande conforme à la revendication 5, réalisé pour permettre de former l'information de qualité par détermination de la validité globale d'un procédé de rapprochement de données selon lequel une position déterminée est associée à une position possible sur un parcours enregistré dans le système de navigation.

7. Appareil de commande conforme à la revendication 5 ou 6, réalisé pour permettre de former également l'information de qualité par comparaison du parcours (B) déterminé avec des parcours (A, 1, 2, 3, 5) enregistrés situés à proximité pour déterminer la probabilité selon laquelle le véhicule se trouve sur un parcours enregistré déterminé (A, 1, 2, 3, 4, 5).
